# EUROPEAN PATENT APPLICATION

(11) **EP 3 089 319 A1**
(43) Date of publication of application: **02.11.2016**
(21) Application number: 14874646.4
(22) Date of filing: 05.12.2014
(51) Int. Cl.: H02J 11/00, H02J 9/06, H02J 9/08

(54) **EMERGENCY POWER SYSTEM FOR NUCLEAR POWER PLANT AND EMERGENCY INDEPENDENT POWER SOURCE**

(30) Priority: 25.12.2013 JP 2013267035
(71) Applicant: Kabushiki Kaisha Toshiba, Minato-ku Tokyo 105-8001 (JP)
(72) Inventor: KOMATSU, Kaori, Tokyo 105-8001 (JP); HORIKAWA, Masaru, Tokyo 105-8001 (JP); KAMEI, Kazuhiro, Tokyo 105-8001 (JP)
(74) Representative: Moreland, David
(86) International application number: PCT/JP2014/006101
(87) International publication number: WO 2015/098004

(57) **Abstract**

A nuclear power plant emergency power system has a first level emergency power source to supply electrical power in a level-1 state and a second level emergency power source (10) to supply electrical power in a level-2 state. The second level emergency power source (10) includes a first rotating electrical machine (16a) electrically and directly connected to at least the normal power supply or the first level emergency power source, a second rotating electrical machine (16b) not electrically connected to the first rotating electrical machine but mechanically connected to the first rotating electrical machine, a second level emergency bus line (14) electrically connected to the second rotating electrical machine via a breaker and supplies electrical power to the emergency load, and a backup generator (15) which starts when the level-2 state comes in order to supply emergency power to the second level emergency bus line (14).

## Description

### TECHNICAL FIELD

Embodiments of the present invention relate to a nuclear power plant emergency power supply system and an emergency independent power source.

### BACKGROUND ART

Among the events that have taken place at nuclear power plants, there was an event in which, when a failure of the offsite power system out of the nuclear power plant occurred, an emergency generator could not be connected to the onsite power supply system in the nuclear power plant. The protection of the power supply source is ensured by breakers and protection relays. If the protection relays are set incorrectly, it may not be possible to prevent the spread of the accident.

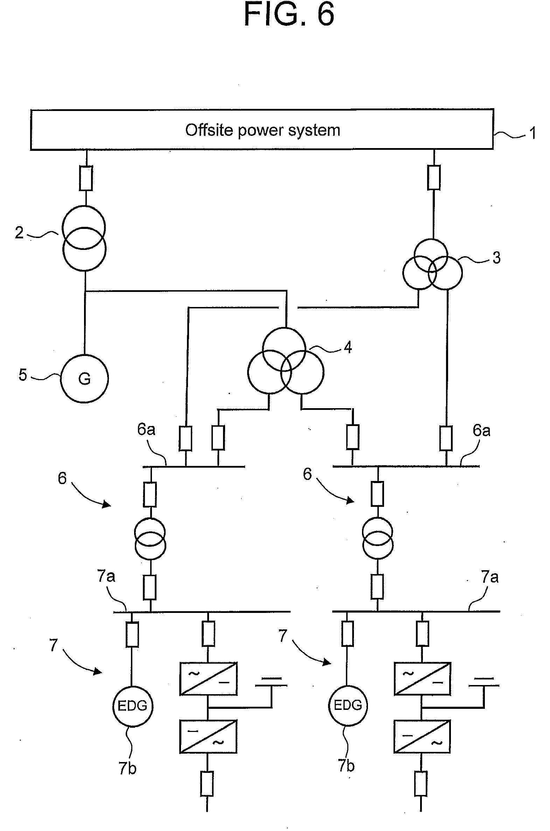

FIG. 6 is a conceptual block diagram showing an example of the configuration of a power supply system in a conventional nuclear power plant. As shown in FIG. 6, the power supply system of the nuclear power plant includes a normal power supply system and an emergency power supply system. A protection system between the normal power supply system and the emergency power supply system consists of only protection relays, breakers and the fuses.

In the case of the above-mentioned event, when a short circuit accident occurred in the offsite power system, the onsite power supply system in the nuclear power plant was isolated from the offsite power system. Attempts were made to shift operation to house alone operation without electrically connecting to offsite power system. However, due to a load rejection, the voltage of the generator and the voltage of the onsite power supply system rose. Due to the rise in the voltage of the onsite power supply system, uninterruptible power supply devices that were powered through two out of four bus lines inside the emergency power supply system came to a halt. Meanwhile, attempts to shift to the house alone operation, as well as to switch to a standby offsite power supply system, failed, which in turn activated an emergency generator. However, as for these two bus lines, the uninterruptible power supply devices that were designed to supply power to a speed meter of the emergency generator were already damaged as described above. Therefore, it was unable to confirm the establishment of speed of the emergency generator, and the emergency generator could not be connected to the onsite power supply system. Because there were two more uninterruptible power supply devices, power was eventually supplied to the emergency system after emergency generators corresponding to these two uninterruptible power supply devices were activated.

### PRIOR ART DOCUMENT

### NON-PATENT DOCUMENT

Non-patent document 1: Nuclear Energy Agency, Defence in depth of Electrical Systems and Grid Interaction, Final DIDELSYS Task Group Report, NEA/CSNI/R(2009)10

### SUMMARY OF THE INVENTION

### PROBLEMS TO BE SOLVED BY THE INVENTION

The uninterruptible power supply devices, which include batteries, are originally designed to supply instrumentation and control power in a stable manner at the time of a power failure or fluctuation of AC power supply. However, in the case of the above-mentioned event, due to the fluctuation of the system-side power supply, two out of the four became malfunctional.

Generally, the protection of the power supply is ensured by the breakers and protection relays. However, as in the case of the above-mentioned event, because of transient events stemming from the fluctuation of the power supply, there is the possibility that the protection function could not be performed normally, and that the power supply system could be damaged by the voltage fluctuation or overcurrent.

Embodiments of the present invention therefore have been made to solve the above problems. The object of the present embodiment is to acquire a power supply system capable of supplying power to items important to safety of nuclear power plants at a time when an abnormality occurs in a normal power supply system.

### MEANS FOR SOLVING THE PROBLEM

According to an embodiment, there is provided a nuclear power plant emergency power system for supplying power to an emergency load that is required to operate in case of an emergency of a nuclear power plant, the system comprising: a first level emergency power source to supply electrical power in a level-1 state in which supply of power from a normal power supply as a power supply source is stopped; and a second level emergency power source to supply electrical power in a level-2 state in which supply of power from the first level emergency power source is stopped, wherein the second level emergency power source includes a first rotating electrical machine electrically and directly connected to at least the normal power supply or the first level emergency power source, a second rotating electrical machine not electrically connected to the first rotating electrical machine but mechanically connected to the first rotating electrical machine, a second level emergency bus line electrically connected to the second rotating electrical machine via a breaker, the second level emergency bus line being configured to supply electrical power to the emergency load, and a backup generator to start when the level-2 state comes, in order to supply emergency power to the second level emergency bus line.

According to an embodiment, there is provided a emergency independent power source that supplies emergency power when power supply functionality is lost with supply of power from both a normal power supply, which serves as a power supply source, and a first level emergency power source stopped, the emergency independent power source comprising: a first rotating electrical machine electrically and directly connected to at least the normal power supply or the first level emergency power source; a second rotating electrical machine not electrically connected to the first rotating electrical machine but mechanically connected to the first rotating electrical machine; a second level emergency bus line electrically connected to the second rotating electrical machine via a breaker, the second level emergency bus line being configured to supply electrical power to an emergency load; and a backup generator to start according to loss of function of the electrical power supply, in order to supply the emergency power to the second level emergency bus line.

### ADVANTAGE OF THE INVENTION

According to embodiments of the present invention, it is possible to acquire a power supply system capable of supplying power to items important to safety of nuclear power plants at a time when an abnormality occurs in a normal power supply system.

### BRIEF DESCRIPTION OF THE DRAWINGS

FIG. 1 is a conceptual configuration diagram showing the overall configuration of a power supply system according to a first embodiment.
FIG. 2 is a conceptual configuration diagram showing the configuration of the independent power supply apparatus of the power supply system and parts of load thereof according to the first embodiment.
FIG. 3 is a conceptual configuration diagram showing the configuration of the independent power supply apparatus of the power supply system and parts of load thereof according to a second embodiment.
FIG. 4 is a conceptual configuration diagram showing the overall configuration of a power supply system according to a third embodiment.
FIG. 5 is a conceptual configuration diagram showing the configuration of the independent power supply apparatus of the power supply system and parts of load thereof according to the third embodiment.
FIG. 6 is a conceptual block diagram showing an example of the configuration of a power supply system at a conventional nuclear power plant.

### EMBODIMENTS FOR CARRYING OUT THE INVENTION

Hereinafter, with reference to the accompanying drawings, embodiments of a nuclear power plant emergency power supply system and an emergency independent power source of the present invention will be described. The same or similar portions are represented by the same reference symbols, and a duplicate description will be omitted.

### [FIRST EMBODIMENT]

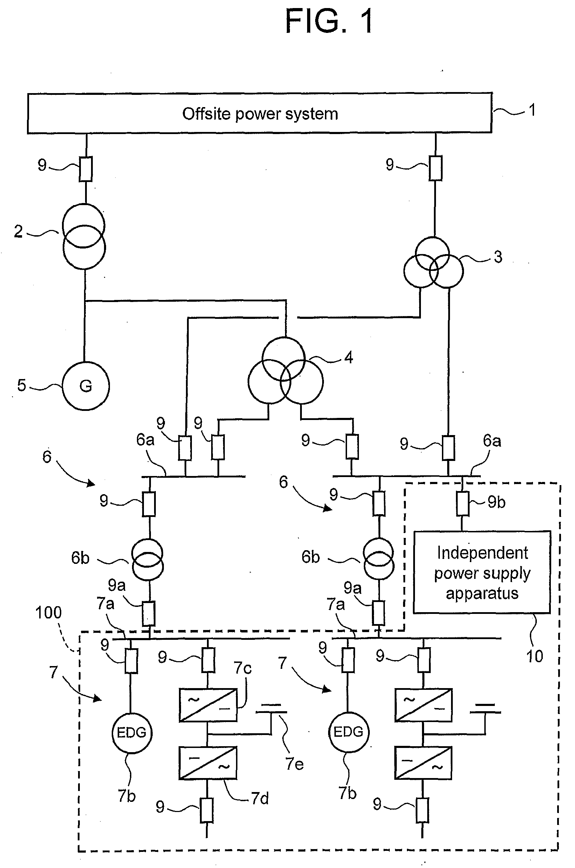

FIG. 1 is a conceptual configuration diagram showing the overall configuration of a power supply system according to a first embodiment. Amain generator 5 is driven by a steam turbine, which is rotated by energy generated in a nuclear reactor (not shown); the main generator 5 generates electrical power by converting mechanical energy into electrical energy. The power generated by the main generator 5 is supplied to an offsite power system 1 via a main transformer 2. Part of the power generated by the main generator 5 is supplied to an onsite normal power supply system 6 via a house transformer 4. The normal power supply system 6 includes normal power supply bus lines 6a, which supply power to the normal power supply units, and normal distribution transformers 6b. To the normal power supply bus lines 6a, power is supplied from the offsite power system 1 via a spare transformer 3.

Breakers 9 are provided between the main transformer 2, the spare transformer 3, the house transformer 4, the normal power supply bus lines 6a, and the off site power system 1. Each of the breakers 9 switches from a closed state to an open state at a time when a protection relay (not shown) corresponding to each of the breakers 9 starts to operate for reasons corresponding to each of the breakers 9. In some cases, the line of the off site power system 1 through which the main generator 5 supplies power is different from the line of the off site power system 1 through which the spare transformer 3 receives power.

During normal operation of the nuclear power plant, electrical power is supplied from the main generator 5 via the house transformer 4 to the normal power supply bus lines 6a. When the main generator 5 is not in operation, or in such cases as where the nuclear power plant is shut down or is restarted after being shut down or is being shut down, electrical power is supplied from the off site power system 1 via the spare transformer 3 to the normal power supply bus lines 6a. The breakers 9 are used to switch between the two states.

A nuclear power plant emergency power supply system 100 includes a first level emergency power sources 7, which supply emergency power to an emergency load in a state of level 1 in which a function of supplying power from the normal power supply is lost; and a second level emergency power source (independent power supply apparatus) 10, which supplies emergency power to an emergency load in a state of level 2 in which the power supply function of the first level emergency power sources 7 is lost. The loss of the function of supplying power from the normal power supply means that it becomes possible to supply power neither from the main generator 5 via the house transformer 4 to the normal power supply bus lines 6a, nor from the off site power system 1 via the spare transformer 3 to the normal power supply bus lines 6a.

Each of the first level emergency power sources 7 includes a first level emergency power supply bus line 7a, an emergency generator 7b, a rectifier 7c, an inverter 7d, and a storage battery 7e. Each of the first level emergency power sources 7 is connected to the normal distribution transformer 6b via breaker 9a.

During normal operation of the nuclear power plant, the breakers 9a are in a closed state. During normal operation of the nuclear power plant, the first level emergency power supply bus lines 7a are supplied with electrical power from the normal power supply system 6 via the normal distribution transformers 6b. When the supply of power from the normal power supply system 6 is stopped, the breakers 9a shift from the closed state to the open state, and the emergency generators 7b supply power to the first level emergency power supply bus lines 7a. For example, in response to a drop in the voltage of the first level emergency power supply bus lines 7a, the emergency generators 7b starts automatically.

The rectifiers 7c transform the electrical power supplied from the normal power supply system 6 from AC to DC. The inverters 7d convert the DC power, which is transformed by the rectifiers 7c, into AC power. The storage batteries 7e store, during normal operation, the DC power supplied from the rectifiers 7c.

The independent power supply apparatus 10 is connected to the normal power supply bus line 6a via a breaker 9b. During normal operation of the nuclear power plant, the breaker 9b is in a closed state, and power is supplied from the normal power supply bus line 6a. At the time of the level-1 state, in which the supply of power from the off site power system 1 and main generator 5 has been lost, the breaker 9b is still in the closed state, even when power is supplied from the first level emergency power sources 7 to the normal power supply bus line 6a; the power is supplied from the normal power supply bus line 6a. At the time of the level-2 state, in which the supply of power from the first level emergency power sources 7 has been lost, the breaker 9b shifts from the closed state to the open state, and the supply of power is carried out inside the independent power supply apparatus 10.

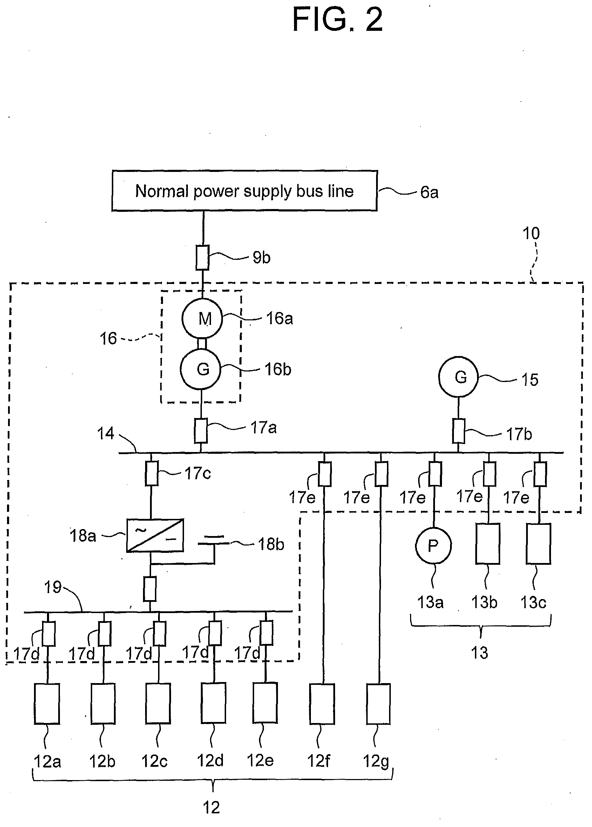

FIG. 2 is a conceptual configuration diagram showing the configuration of the independent power supply apparatus of the power supply system and parts of load thereof according to the first embodiment. The independent power supply apparatus 10, which is a second level emergency power source, includes an independent power supply MG set 16, a second level emergency bus line 14, and a backup generator 15. The second level emergency bus line 14 supplies power to a normal operation load group 12, which includes the DC and measurement control power supplies needed to be operated during normal operation of the nuclear power plant and even when the normal power supply or the first level emergency power source is stopped, as well as to an emergency operation load group 13, which is operated only in the event of an emergency. For example, the backup generator 15 may be a diesel generator or the like.

The normal operation load group 12 is needed for such operations as starting or operating the backup generator 15 and switching power supplies. For example, a charger 18a for charging a storage battery 18b; a breaker control power supply 12a; a backup generator (BG) excitation power supply 12b; a backup generator (BG) control power supply 12c; a control panel 12d; an electric motor-operated valve 12e; a backup generator (BG) preheater 12f; lighting 12g; and the like belong to the normal operation load group 12. Among them, the breaker control power supply 12a, the BG excitation power supply 12b, the BG control power supply 12c, the control panel 12d, and the electric motor-operated valve 12e are the DC power supply loads that receive power from a DC bus line 19. The BG preheater 12f and the lighting 12g are AC power supply loads.

The storage battery 18b needs to be charged during normal time, so that the storage battery 18b can supply electrical power in the event of a station blackout to the control power supply 12a for breakers 17a, 17b, 17c, and 17e, the BG excitation power supply 12b for the backup generator 15, the BG control power supply 12c, and the control panel 12d that is needed to monitor and control the operation of the plant, the electric motor-operated valve 12e, and the like. Accordingly, the breaker 17d is in a closed state during the normal and emergency times, except when the breaker 17d should shift to the open side due to the activation of a protection relay (not shown) pertaining to that breaker.

The emergency operation load group 13 includes loads needed to ensure the safety of the plant. The group includes those necessary for the safety of a nuclear reactor, such as an alternative water injection pump 13a, a distribution board 13b, and air-conditioning equipment 13c, for example. The emergency operation load group 13, the BG preheater 12f, and the lighting 12g are not required to be in operation during normal operation of the plant, and the breakers 17e are open.

The backup generator 15 automatically starts in response to a drop in the voltage of the second level emergency bus line 14, which occurs when the normal power supply system 6 and the first level emergency power sources 7 are stopped; the backup generator 15 then supplies emergency power to the second level emergency bus line 14. When the normal power supply system 6 or the first level emergency power sources 7 are alive, power is constantly supplied from the normal power supply bus lines 6a to the normal operation load group 12. Therefore, the backup generator 15 do not have to operate, and the breaker 17b is therefore opened.

The independent power supply MG set 16 includes an independent power supply MG set electric motor 16a, which is a first rotating electrical machine, and an independent power supply MG set generator 16b, which is a second rotating electrical machine. The independent power supply MG set electric motor 16a and the independent power supply MG set generator 16b are mechanically connected directly to each other, but are not electrically connected. As the independent power supply MG set electric motor 16a is supplied with electrical power and rotated, the independent power supply MG set generator 16b that is directly connected to the independent power supply MG set electric motor 16a generates and supplies power to the second level emergency bus line 14.

What has been described here is the case where the independent power supply MG set electric motor 16a, which is the first rotating electrical machine, and the independent power supply MG set generator 16b, which is the second rotating electrical machine, are directly connected to each other. However, the present invention is not limited to this configuration. For example, the two may be connected through gears, or the transmission of power between the two may be carried out through fluid coupling or the like.

The independent power supply MG set 16 keeps supplying short-term electrical power with the help of the mechanical inertial energy of the independent power supply MG set electric motor 16a and independent power supply MG set generator 16b, even when the voltage of a power supply source to the independent power supply MG set electric motor 16a fluctuates.

At the nuclear power plant emergency power supply system 100 of the present embodiment with the above-described configuration, during normal time, power is supplied from the normal power supply system 6 to the first level emergency power sources 7. Even to the loads of the independent power supply apparatus 10 that are required to be supplied with power in the event of an emergency, power is supplied via the independent power supply MG set 16. In the case of such an event as the stop of power supply from the normal power supply system 6 (in the state of level 1), power is supplied from the first level emergency power sources 7 to emergency loads of the first level emergency power sources 7, while the independent power supply apparatus 10 is supplied with power via the independent power supply MG set 16.

If the supply of power to loads of the independent power supply apparatus 10 has stopped for such reasons as a failure to start the emergency generator 7b of the first level emergency power sources 7 (Level-2 state), the backup generator 15 of the independent power supply apparatus (second level emergency power source) 10 statrts to supply emergency power to the second level emergency bus line 14. At this time, the supply of power to the BG excitation power supply 12b and BG control power supply 12c of the backup generator 15 and others that are necessary to activate and operate the backup generator 15 are conducted from the storage battery 18b until the backup generator 15 starts.

Electrical power is supplied to the independent power supply apparatus 10 via the independent power supply MG set 16. Therefore, adverse effects of voltage fluctuations and fault current caused by an accident at the offsite power system 1 and main generator 5 are electrically blocked at the independent power supply MG set 16. As a result, the effects are prevented from spreading to the normal operation load group 12 and the emergency operation load group 13. There is the possibility that the independent power supply MG set generator 16a could trip due to the voltage fluctuations and fault current. However, the independent power supply MG set generator 16b is electrically separated from the independent power supply MG set generator 16a. Therefore, the electric, adverse effects do not spread to the normal operation load group 12 and the emergency operation load group 13.

Moreover, there is the backup generator 15, which is capable of supplying power to the second level emergency bus line 14. In the normal operation load group 12, there are the control power supply and equipment needed to activate and operate the control power supply system and the backup generator 15. Therefore, even if the supply of power from the normal power supply system 6 and the first level emergency power sources 7 is stopped, power can be constantly supplied from the backup generator 15 to the items important to safety of the nuclear reactors.

As described above, the nuclear power plant emergency power system of the present embodiment protects emergency loads and their power supply system from the damage inflicted by the voltage fluctuations and fault current caused by accidents at the offsite power system and the main generator. Even when the normal power supply system is halted, electrical power is supplied to the items important to safety.

### [SECOND EMBODIMENT]

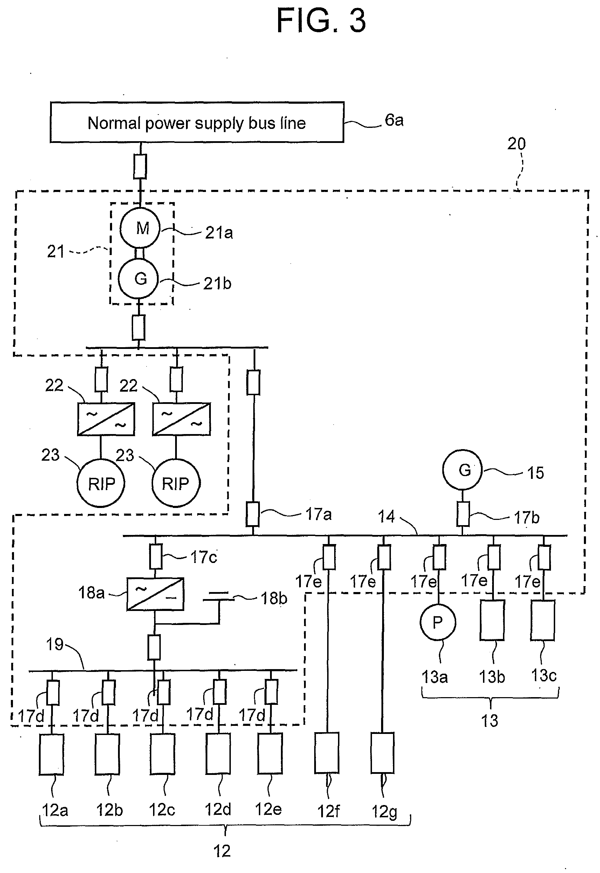

FIG. 3 is a conceptual configuration diagram showing the configuration of the independent power supply apparatus of the power supply system and parts of load thereof according to a second embodiment. The present embodiment is a modification of the first embodiment. An independent power supply apparatus (second level emergency power source) 20 of the nuclear power plant emergency power supply system 100 (FIG. 1) of the second embodiment includes a recirculation pump driving MG set electric motor 21a, which serves as a first rotating electrical machine; and a recirculation pump driving MG set generator 21b, which serves as a second rotating electrical machine.

The recirculation pump driving MG set electric motor 21a and the recirculation pump driving MG set generator 21b, which constitute a recirculation pump driving MG set 21, are designed to supply, during normal operation of the nuclear power plant, electrical power to reactor pressure vessel recirculation pumps 23 via variable frequency power supply devices 22, as well as to a normal operation load group 12 of the independent power supply apparatus (second level emergency power source) 20.

The recirculation pumps (not shown) driven by the recirculation pump driving MG set 21 may be RIPs (Reactor Internal Pumps) provided inside the reactor pressure vessel, or recirculation pumps provided on reactor coolant recirculation pipes.

The present embodiment with the above configuration can minimize the number of pieces of equipment to be added, and secure the functionality of the independent power supply.

### [THIRD EMBODIMENT]

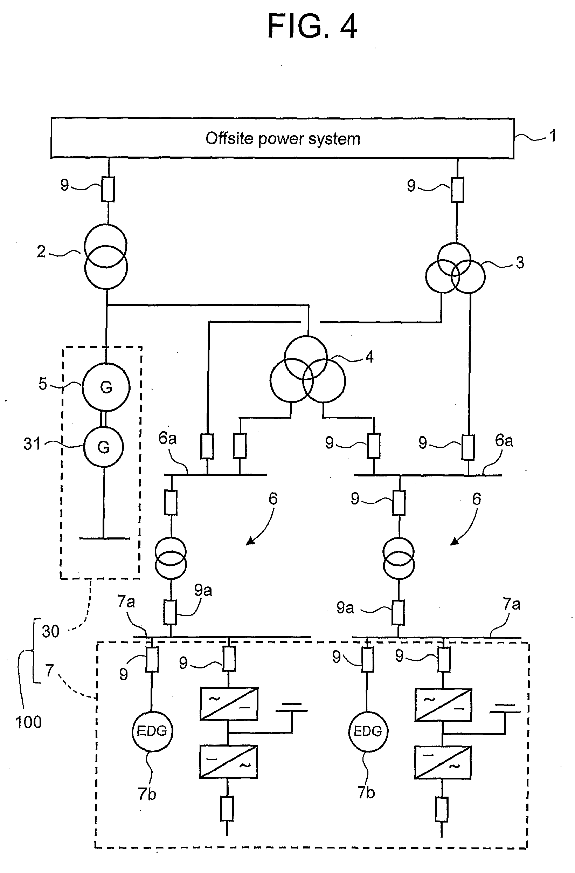

FIG. 4 is a conceptual configuration diagram showing the overall configuration of a power supply system according to a third embodiment. An independent power supply apparatus (second level emergency power source) 30 of the third embodiment includes a main generator 5 of the nuclear power plant, which serves as a first rotating electrical machine. The second level emergency power source 30 includes a sub-generator 31, which serves as a second rotating electrical machine and is mechanically connected to the main generator 5.

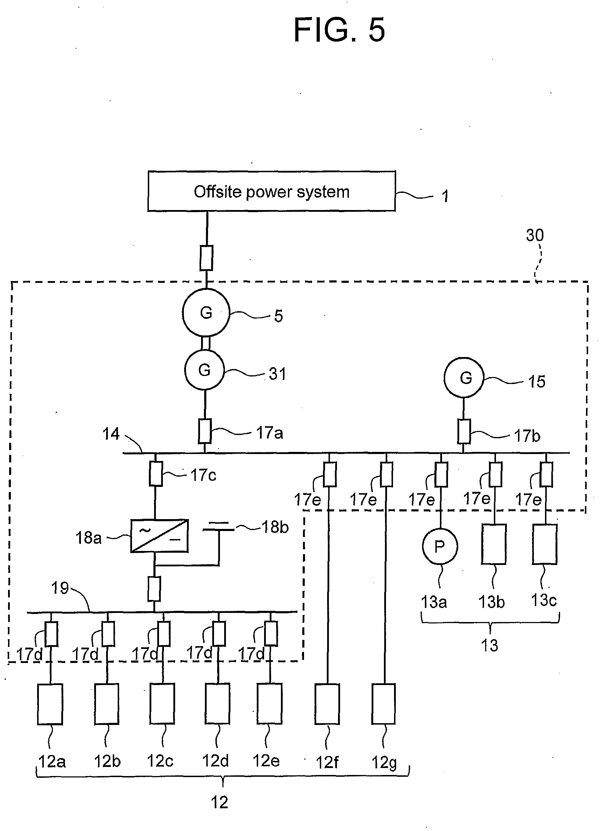

FIG. 5 is a conceptual configuration diagram showing the configuration of the independent power supply apparatus of the power supply system and parts of load thereof according to the third embodiment. During normal operation of the nuclear power plant, the main generator 5 is generating electrical power. The sub-generator 31, which is mechanically connected to the main generator 5, is also generating electrical power. The electrical power generated by the sub-generator 31 is supplied to a second level emergency bus line 14 via a breaker 17a.

If the main generator 5 or a steam turbine (not shown) for driving the main generator 5 has tripped for such reasons as abnormalities, electrical power is supplied to the second level emergency bus line 14 by rotation energy of the main generator 5, sub-generator 31 or steam turbine until the backup generator 15 comes online. Accordingly, the breaker 17a remains in the closed state during this switching process, except the case where a protection relay (not shown) operates.

The present embodiment with the above configuration can minimize the number of pieces of equipment to be added, and secure the functionality of the independent power supply.

### [OTHER EMBODIMENTS]

The present invention is described above by way of several embodiments. However, the embodiments are presented only as examples without any intention of limiting the scope of the present invention.

Moreover, features of the embodiments may be used in combination. Furthermore, the above-described embodiments may be put to use in various different ways and, if appropriate, any of the components thereof may be omitted, replaced or altered in various different ways without departing from the spirit and scope of the invention.

Therefore, all the above-described embodiments and the modifications made to them are within the spirit and scope of the present invention, which is specifically defined by the appended claims, as well as their equivalents.

### EXPLANATION OF REFERENCE SYMBOLS

1: offsite power system, 2: main transformer, 3: spare transformer, 4: house transformer, 5: main generator, 6: onsite normal power supply system, 6a: normal power supply bus line, 6b: normal distribution transformers, 7: first level emergency power sources, 7a: first level emergency power supply bus line, 7b: emergency generator, 7c: rectifier, 7d: inverter, 7e: storage battery, 9, 9a, 9b: breaker, 10: second level emergency power source (independent power supply apparatus), 12 : normal operation load group, 12a: breaker control power supply, 12b: backup generator (BG) excitation power supply, 12c: backup generator (BG) control power supply, 12d: control panel, 12e: electric motor-operated valve, 12f: backup generator (BG) preheater, 12g: lighting, 13: emergency operation load group, 13a: alternative water injection pump, 13b: distribution board, 13c: air-conditioning equipment, 14: second level emergency bus line, 15: backup generator, 16: independent power supply MG set, 16a: independent power supply MG set, 16b: independent power supply MG set generator, 17a, 17b, 17c, 17d, 17e: breaker, 18a: charger, 18b: storage battery, 19: DC bus line, 20: independent power supply apparatus (second level emergency power source), 21: recirculation pump driving MG set, 21a: recirculation pump driving MG set electric motor, 21b: recirculation pump driving MG set generator, 22: variable frequency power supply device, 23: reactor pressure vessel recirculation pump, 30: independent power supply apparatus (second level emergency power source), 31: sub-generator, 100: nuclear power plant emergency power supply system

## Claims

1. A nuclear power plant emergency power system for supplying power to an emergency load that is required to operate in case of an emergency of a nuclear power plant, the system comprising:
a first level emergency power source to supply electrical power in a level-1 state in which supply of power from a normal power supply as a power supply source is stopped; and
a second level emergency power source to supply electrical power in a level-2 state in which supply of power from the first level emergency power source is stopped, wherein
the second level emergency power source includes
a first rotating electrical machine electrically and directly connected to at least the normal power supply or the first level emergency power source,
a second rotating electrical machine not electrically connected to the first rotating electrical machine but mechanically connected to the first rotating electrical machine,
a second level emergency bus line electrically connected to the second rotating electrical machine via a breaker, the second level emergency bus line being configured to supply electrical power to the emergency load, and
a backup generator to start when the level-2 state comes, in order to supply emergency power to the second level emergency bus line.

2. The nuclear power plant emergency power system according to claim 1, wherein
the first rotating electrical machine is an MG set electric motor, and the second rotating electrical machine is an MG set generator.

3. The nuclear power plant emergency power system according to claim 2, wherein:
the nuclear power plant includes a recirculation pump to circulate reactor coolant inside a reactor pressure vessel provided in the nuclear power plant and a recirculation pump driving MG set to drive the recirculation pump; and
an electric motor of the recirculation pump driving MG set and a generator of the recirculation pump driving MG set work respectively as the first rotating electrical machine and the second rotating electrical machine and are designed to supply, to some of the emergency loads, part of the electrical power for the recirculation pump.

4. The nuclear power plant emergency power system according to claim 1, wherein:
the nuclear power plant includes:
a main generator, which eventually makes electrical power energy from mechanical energy that is converted from thermal energy generated inside a reactor pressure vessel provided in the nuclear power plant, and
a sub-generator not electrically connected to the main generator but mechanically connected to the main generator; and
the first rotating electrical machine is the main generator for electrical power generation to supply electrical power to outside as the nuclear power plant, and the second rotating electric machine is the sub-generator to supply electrical power to some of the emergency loads.

5. The nuclear power plant emergency power system according to any one of claims 1 to 4, wherein
the emergency loads include a load that operates during normal operation of the nuclear power plant, and a load that should be activated in the event of an emergency.

6. The nuclear power plant emergency power system according to any one of claims 1 to 5, wherein
the backup generator is automatically activated in response to voltage reduction of the second level emergency bus line below a predetermined voltage.

7. An emergency independent power source that supplies emergency power when power supply functionality is lost with supply of power from both a normal power supply, which serves as a power supply source, and a first level emergency power source stopped, the emergency independent power source comprising:
a first rotating electrical machine electrically and directly connected to at least the normal power supply or the first level emergency power source;
a second rotating electrical machine not electrically connected to the first rotating electrical machine but mechanically connected to the first rotating electrical machine;
a second level emergency bus line electrically connected to the second rotating electrical machine via a breaker, the second level emergency bus line being configured to supply electrical power to an emergency load; and
a backup generator to start according to loss of function of the electrical power supply, in order to supply the emergency power to the second level emergency bus line.
